# EUROPÄISCHE PATENTSCHRIFT

(11) **EP 0 342 414 B1**
(45) Veröffentlichungstag und Bekanntmachung des Hinweises auf die Patenterteilung: **10.02.1993**
(21) Anmeldenummer: 89107737.2
(22) Anmeldetag: 28.04.1989
(51) Int. Cl.: F16L 3/08

(54) **Halterungsschelle für im wesentlichen vertikal verlaufende Rohrleitungen**
Clamp for in particular upright pipelines
Collier de fixation pour conduites en particulier verticales

(30) Priorität: 19.05.1988 DE 3817015
(43) Veröffentlichungstag der Anmeldung: 23.11.1989
(73) Patentinhaber: LISEGA GMBH, D-27404 Zeven (DE)
(72) Erfinder: Liesegang, Gerhard, D-2730 Zeven (DE)
(74) Vertreter: Lippert, Hans-Joachim, Dipl.-Ing.

(56) Entgegenhaltungen:
- DE-A- 3 808 145
- US-A- 2 942 820

## Beschreibung

Die Erfindung bezieht sich auf eine Halterungsschelle für im wesentlichen vertikal verlaufende Rohrleitungen, insbesondere von Rohrleitungssystemen des Kraftwerksbaues, die einen Auflagerbock für die Rohrleitung und und an den Enden Halteteile zur Lastübernahme besitzen, wobei das Rohr am Umfang mit Knacken versehen ist, die auf Trägerteilen der Schelle aufsitzen.

In der US-PS 2 942 820 ist eine Rohrschelle beschrieben, die aus je zwei in der Höhe im Abstand voneinander angeordneten Stabeisen besteht, welche entsprechend dem Durchmesser des Rohres gebogene Mittelteile aufweisen, wobei die gestreckt verlaufenden Endteile durch Schraubbolzen miteinander verbunden sind. Das Rohr ist mit radial verlaufenden Vorsprüngen versehen, die auf dem obersten Schellenpaar aufsitzen. Die in der Höhe im Abstand voneinander befindlichen Schellenpaare sind durch parallel zur Rohrachse verlaufende Plattenstücke miteinander verbunden. An den äußeren Enden des oberen Schellenpaares greifen die Aufhängestangen oder -seile an. Eine solche Rohrschelle für vertikal verlaufende Rohre hält an dem Rohr nur durch Klemmwirkung, wobei auch nur die Halteeisen auf Biegung beansprucht werden. Die Halteeisen unterliegen zur Gestaltung einer Warmbehandlung, die danach ein Ausglühen des geformten Teils erforderlich macht. Eine solche Schelle weist schwache Stellen an den Biegestellen auf und hat außerdem ein hohes Gewicht. Durch die Klemmwirkung für die Halterung wird vielfach eine Überbeanspruchung verursacht.

In der DE-0S 38 08 145 ist eine Trag- oder Aufhängevorrichtung für Kabel, Rohrleitungen oder dgl. mit stabförmigen Stielen beschrieben, die zur Verbindung mit angefügten Trag- und/oder Befestigungseinrichtungen für die Kabel oder dgl. eingerichtet sind und eine rechtwinklig zu der Längsachse des Stieles verlaufende, im wesentlichen rechteckige Kopfplatte tragen, die zwei parallel zueinander verlaufende gerade lange Schmalseiten aufweist, wobei der Stiel mittels der Kopfplatte an einer Decken- oder Gebäudewand zu befestigen ist. Um bei kleinen für geringe Lasten ausgelegten Kopfplatten im Bedarfsfalle auch die Maximallasten an die Stiele anzuhängen, ist eine Adaptereinrichtung vorgesehen, die einen Rahmen aufweist, bei dem die Längs- und Querseiten des Rahmens zumindest teilweise stoffschlüssig, d.h. durch Schweißung miteinander verbunden oder lösbar zusammengesteckt sein können. Bei der steckbaren Ausführungsform sind an den Längs- bzw. an den Querseiten Fortsätze ausgebildet, die in entsprechende Öffnungen in den Quer- bzw. den Längsseiten einsteckbar sind. Um die Fortsätze in den Öffnungen zu sichern, können an diesen Haken angeformt sein, auf denen Befestigungsmuttern aufgeschraubt sind. Man kann auch Vorsteckstifte verwenden. Der Rahmen wird um den Stiel herum zusammengesteckt und an der Gebäudestruktur befestigt.

Aufgabe der Erfindung ist es, eine Halterungsschelle der anfangs genannten Art zu schaffen, die leicht zu handhaben ist und bei der erheblich an Gewicht eingespart wird. Zugleich kann die Halterungsschelle den verschiedenen Größen der Rohre auf einfache Weise angepaßt weden. Die Erfindung zeichnet sich dadurch aus, daß der Auflagerbock als Rahmen lösbar zusammensteckbare Längs- und Querstege und Trägerteile aufweist, die das Rohr der Rohrleitung umfassen, daß die Trägerteile an den freien Enden rechtwinklige Eckausschnitte aufweisen, mit denen sie in Aussparungen der Längsstege des Rahmens eingreifen und daß die Trägerteile an den zueinander gekehrten Enden mit halbkreisförmigen Ausschnitten versehen sind.

Eine solche Halterungsschelle, die die Gestalt einer Kastenschelle aufweist, läßt sich nicht nur auf einfache Weise herstellen, sondern ist auch einfach in der Handhabung, läßt sich leicht montieren und innerhalb eines vorbestimmten Bereiches in verschiedenen Größen zur Halterung des Rohres anpassen, wobei lediglich die Kreisausschnitte der Trägerteile zu ändern sind.

Vorteilhaft besitzt jedes Trägerteil an dem einen Ende des Halbkreisausschnittes einen über die Mitte desselben ragenden Abschnitt und an dem anderen Teil einen von der Mitte zurückgesetzten Abschnitt, wobei die unterschiedlich langen Abschnitte der beiden Trägerteile sich gegenüberstehen. Die Längsseiten der Trägerteile können mit kurzen Querschlitzen oder Langlöchern zur Aufnahme von an den Längsstegen angebrachten Schraubbolzen versehen sein.

Die Erfindung wird anhand eines in der Zeichnung dargestellten Ausführungsbeispiels nachstehend erläutert:
Figuren 1, 2 und 3 zeigen eine Ausführungsform der Halterungsschelle gemäß der Erfindung in Ansicht, Draufsicht und Seitenansicht und im Schema,

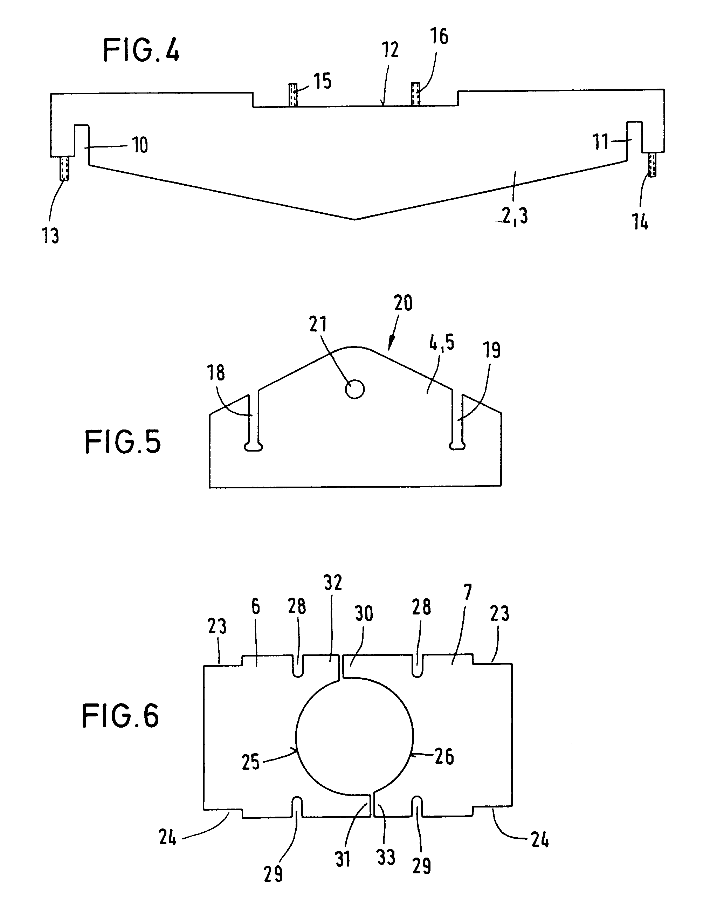

Figur 4 stellt einen Längssteg im Aufriß schematisch dar.
Figur 5 zeigt ein Seitenteil der Halterungsschelle im Aufriß und im Schema.
Figur 6 veranschaulicht die Trägerteile gemäß der Erfindung in Draufsicht und im Schema.
Figuren 7 und 8 stellen eine Sicherungsleiste in Draufsicht und in Ansicht, zum Teil im Schnitt, schematisch dar.
Figur 9 veranschaulicht die kastenförmige Halterungsschelle im Schaubild schematisch.

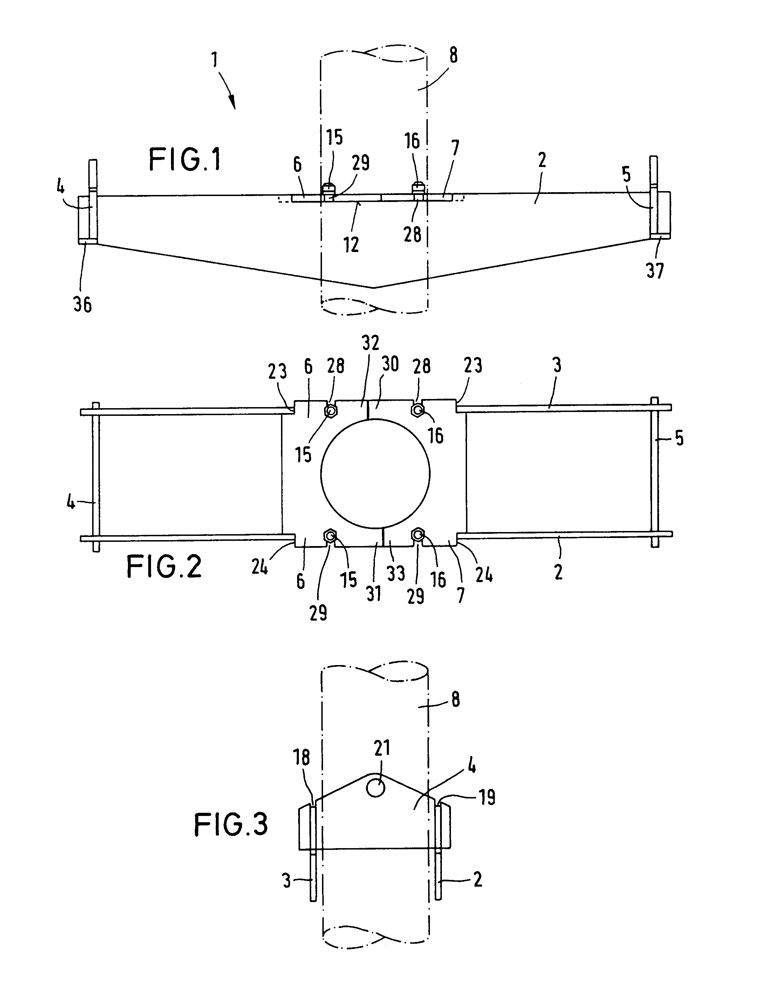

Die Halterungsschelle 1 der Figuren 1 bis 3 setzt sich nur aus einzelnen Plattenstücken zusammen, und zwar den plattenförmigen Längsstegen 2,3, den Seitenteilen 4,5 und den Trägerteilen 6,7, die eine kastenförmige Schelle bilden und zwischen sich das zu halternde Rohr aufnehmen. Hierbei erfolgt die Verriegelung der einzelnen lose bleibenden Plattenstücke im wesentlichen mittels ineinandergreifender Schlitzverbindungen u.dgl.

Die Längsstege 2,3 sind nahe den Enden mit Schlitzen 10,11 versehen, die an der Unterseite geführt sind und zur Verriegelung mit Gegenschlitzen der Seitenteile dienen. Im Mittelbereich ist auf der Oberseite der Längsstege 2,3 ein Ausschnitt 12 zur Aufnahme der Trägerteile angeordnet. Weiterhin können an der unteren Stirnseite Schraubbolzen 13,14 und in dem Ausschnitt 12 Schraubbolzen 15,16 für Zwecke vorgesehen sein, die nachstehend erläutert werden.

Die Seitenteile 4,5 dienen zur Verriegelung mit den Längsstegen 2 und 3 und sind zugleich Abstandshalter für die Längsstege. Die Seitenteile sind nahe den Enden mit Schlitzen 18 und 19 versehen, die an der Oberseite der Seitenteile geführt sind und mit denen eine Verriegelung mit den Schlitzen 10,11 der Längsstege vorgenommen werden kann. Im Mittelbereich der Seitenteile 4,5 kann eine Aufhängevorrichtung zur Lastübernahme angeordnet werden. Diese besteht zweckmäßig aus einer geschlossenen Lochung 21.

Die Trägerteile 6 und 7 stellen ebenfalls Plattenstücke dar, die durch Ausstanzen oder Brennschneiden aus einer größeren Platte erzeugt werden können. Die Trägerteile 6 und 7 weisen an den freien Enden Ausschnitte 23,24 auf, mit denen die Trägerteile 6,7 in die Aussparung 12 der Längsstege 2,3 eingelegt werden. An den zueinander zugekehrten Seiten sind die Trägerteile 6,7 mit halbkreisförmigen Ausschnitten 25,26 ausgestattet, die dem jeweiligen Durchmesser des zu halternden Rohres angepaßt sind. An den Längsseiten der Trägerteile 6,7 sind kurze Längsschlitze 28,29 angebracht, durch die die Schraubbolzen 15,16 der Längsstege 2,3 greifen können.

Jedes Trägerteil 6,7 weist an dem einen Ende des Halbkreisausschnittes 25,26 einen über die Mitte desselben ragenden Abschnitt 30,31 und einen von der Mitte zurückgesetzten Abschnitt 32,33 auf, wobei die Trägerteile 6,7 so zueinander verlegt sind, daß jeweils dem langen Abschnitt ein kurzer Abschnitt gegenübersteht. Die Trägerteile 6,7 dienen zur Aufnahme von Knacken 35, die an dem Rohr 8 angeschweißt sein können und durch die die Halterung des Rohres auf der Halterungsschelle erreicht wird. Durch die gegenseitige Versetzung der Abschnitte 30,32 und 31,33 ist man unabhängig davon, an welchen Stellen die Knacken 35 sich an dem Rohr 8 befinden. Es wird verhindert, daß die Knacken nicht in der Mittenachse auf einen Spalt zwischen den Abschnitten zu liegen kommen.

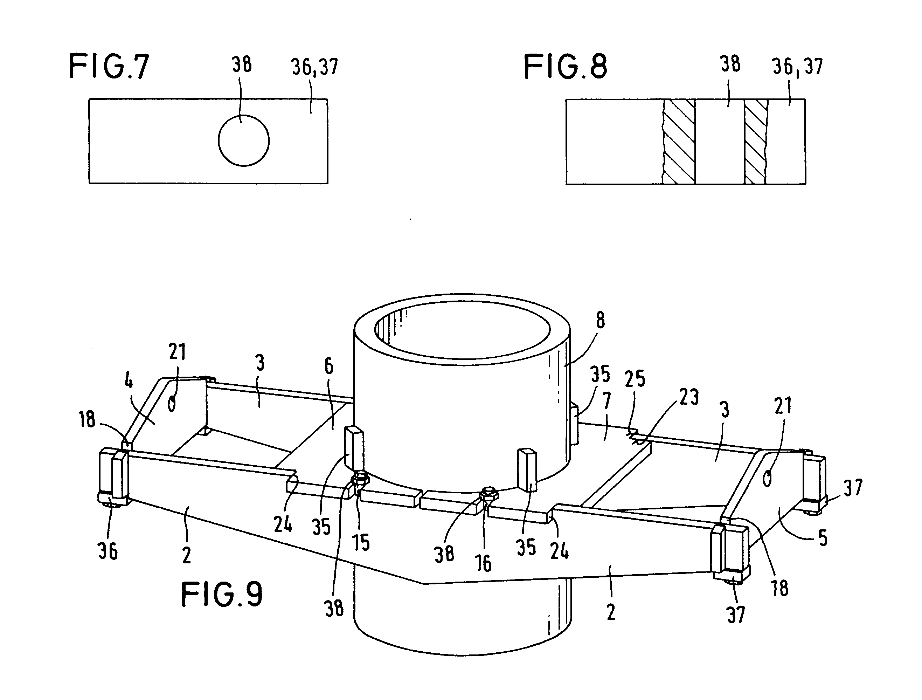

Wie Figur 9 erkennen läßt, bilden die Längsstege 2,3 und die Seitenteile 4,5 durch Ineinanderstecken mittels der Schlitze 10,11 und 18,19 von Längsstegen und Seitenteilen eine geschlossene Kastenform, innerhalb der das zu halternde Rohr 8 hindurchgeführt ist. Da die Seitenteile 4,5 lastaufnehmend an einem ortsfesten Teil eines Gestells gehalten werden, werden die in die Seitenteile 4,5 eingeschobenen Längsstege 2,3 von den Seitenteilen 4,5 getragen. Zur Sicherung gegen ein Verschieben und Lösen der Seitenteile 4,5 von den Längsstegen 2,3 im unbelasteten Zustand und bei Nichtgebrauch der Halterungsschelle ist eine Sicherungsleiste 36,37 vorgesehen, die eine Bohrung 38 aufweist, durch die die an den Enden der Längsstege 2,3 vorhandenen Schraubbolzen 13,14 greifen können, wobei die Festlegung der Sicherungsleiste 36,37 durch auf die Schraubbolzen 13,14 aufgeschraubte Muttern erfolgt.

Die Trägerteile 6,7 greifen mit den Eckausschnitten 23,24 in die Aussparungen 12 der Längsstege 2,3, wobei auch durch die Trägerteile 6,7 die Längsstege 2,3 voneinander auf Abstand gehalten werden. Bei in die Aussparungen 12 eingelegten Trägerteilen 6,7 können diese durch die Schraubbolzen 15,16 gesichert werden, die durch die Schlitze 28,29 hindurchragen. Die Sicherung der Trägerteile 6,7 gegen Abheben erfolgt mittels der Muttern 38, mit denen die Trägerteile 6,7 festgespannt gehalten werden.

## Patentansprüche

1. Halterungsschelle (1) für im wesentlichen vertikal verlaufende Rohrleitungen (8), insbesondere von Rohrleitungssystemen des Kraftwerkbaues, die einen Auflagerbock (2, 3, 4, 5) für die Rohrleitung (8) und an den Enden Halteteile (21) zur Lastübernahme besitzt, wobei das Rohr (8) am Umfang mit Knacken (35) versehen ist, die auf Trägerteilen (6, 7) der Schelle (1) aufsitzen, **dadurch gekennzeichnet,** daß der Auflagerbock (2, 3, 4, 5) lösbar zusammensteckbare Längs- und Querstege (4, 5) und Trägerteile (6, 7) aufweist, die das Rohr (8) der Rohrleitung umfassen, daß die Trägerteile (6, 7) an den freien Enden rechtwinklige Eckausschnitte (23, 24) aufweisen, mit denen die in Aussparungen der Längsstege des Rahmens (2, 3, 4, 5) eingreifen und daß die Trägerteile an den zueinander gekehrten Enden mit halbkreisförmigen Ausschnitten (25, 26) versehen sind.

2. Halterungsschelle nach Anspruch 1, **dadurch gekennzeichnet,** daß jedes Trägerteil (6, 7) an dem einen Ende des Halbkreisausschnittes (25, 26) ein über die Mitte desselben ragenden Abschnitt (30, 31) und an dem anderen Ende einen von der Mitte zurückgesetzten Abschnitt (32, 33) besitzt, und daß die unterschiedlich langen Abschnitte (30, 32; 31, 33) der beiden Trägerteile (6, 7) sich gegenüberstehen.

3. Halterungsschelle nach Anspruch 1 oder 2, **dadurch gekennzeichnet,** daß die Längsseiten der Trägerteile (6, 7) mit kurzen Querschlitzen (28, 29) oder Langlöchern zur Aufnahme von an den Längsstegen (2, 3) angebrachten Schraubbolzen (15, 16) versehen sind.

## Claims

1. Mounting clamp (1) for substantially vertical pipelines (8), in particular for pipeline systems in nuclear power plant constructions, which comprises a supporting frame (2, 3, 4, 5) for the pipeline (8) and at the ends mounting parts (21) for taking the load, the pipe (8) being provided on the periphery with projections (35) which are mounted on carrier parts (6, 7) of the clamp (1), characterised in that the supporting frame (2, 3, 4, 5) comprises longitudinal and transverse webs (4, 5) and carrier parts (6, 7) which can be detachably fitted together and which surround the pipe (8) of the pipeline; in that the carrier parts (6, 7) comprise at the free ends rectangular corner cut-outs (23, 24) with which they engage in recesses in the longitudinal webs of the frame (2, 3, 4, 5); and in that the carrier parts are provided at the facing ends with semicircular cut-outs (25, 26).

2. Mounting clamp according to Claim 1, characterised in that each carrier part (6, 7) comprises at one end of the semicircular cut-out (25, 26) a section (30, 31) which projects over the centre line thereof and, at the other end, a section (32, 33) which is set back from the centre line; and in that the sections (30, 32; 31, 33) of different lengths of the two carrier parts (6, 7) are opposite one another.

3. Mounting clamp according to Claim 1 or 2, characterised in that the longitudinal sides of the carrier parts (6, 7) are provided with short transverse slots (28, 29) or elongate holes for accommodating threaded bolts (15, 16) mounted on the longitudinal webs (2, 3).

## Revendications

1. Bride de fixation (1) pour des conduites (8) qui s'étendent en direction essentiellement verticale, en particulier de systèmes de canalisations dans la construction de centrales électriques, comprenant un support d'appui (2, 3, 4, 5) pour la conduite (8) et, aux extrémités de celui-ci, des éléments de fixation (21) pour le transfert de la charge, le tube (8) étant muni, à sa périphérie, de taquets (35) qui sont posés sur des éléments porteurs (6, 7) de la bride (1), caractérisée en ce que le support d'appui (2, 3, 4, 5) comporte des branches longitudinales (2, 3) et transversales (4, 5) qui peuvent être assemblées de façon amovible par emboîtement, et des éléments porteurs (6, 7) qui enserrent le tube (8) de la conduite, en ce que les éléments porteurs (6, 7) présentent, à leurs extrémités libres, des entailles rectangulaires d'angle (23, 24), par lesquelles ils s'engagent dans des encoches des branches longitudinales du support (2, 3, 4, 5), et en ce que les éléments porteurs sont munis, à leurs extrémités dirigées l'une vers l'autre, de découpures semi-circulaires (25, 26).

2. Bride de fixation selon la revendication 1, caractérisée en ce que chaque élément porteur (6, 7) comporte, à l'une des extrémités de la découpure semi-circulaire (25, 26), un segment (30, 31) qui fait saillie au-delà du milieu de cette découpure et, à l'autre extrémité, un segment (32, 33) en retrait par rapport au milieu, et en ce que les segments de longueurs différentes (30, 32; 31, 33) des deux éléments porteurs (6, 7) se font face.

3. Bride de fixation selon la revendication 1 ou 2, caractérisée en ce que les côtés longitudinaux des éléments porteurs (6, 7) sont munis de courtes fentes transversales (28, 29) ou de trous oblongs pour recevoir des boulons filetés (15, 16) fixés aux branches longitudinales (2, 3) du support.
